(19) Europäisches Patentamt

European Patent Office

Office européen des brevets

(11) **EP 1 731 956 A1**

(12) **EUROPEAN PATENT APPLICATION**

(43) Date of publication:
**13.12.2006 Bulletin 2006/50**

(51) Int Cl.:
***G03B 21/14*** *(2006.01)*

(21) Application number: **05012485.8**

(22) Date of filing: **10.06.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **Dynascan Technology Corp.
Gueishan Shiang
Taoyuan (TW)**

(72) Inventor: **Wang, Frank
Kuei-Shan Hsiang
Taoyuan Hsien (TW)**

(74) Representative: **Eisenführ, Speiser & Partner
Patentanwälte Rechtsanwälte
Postfach 10 60 78
28060 Bremen (DE)**

(54) **Optical system for a light emitting apparatus**

(57) An optical system includes a light integrator (11') and a collimator (12). The light integrator (11') includes an optical body (11) that has opposite first and second ends (113, 114). The second end (114) is reduced in cross-section with respect to the first end (113) to an extent so as to form a light spot (50) at the second end (114). The collimator (12) is disposed adjacent to the second end (114) of the optical body (11) such that the distance from the light spot (50) to the collimator (12) along an optical path (4) is substantially equal to the focal length (f) of the collimator (12).

FIG. 8

EP 1 731 956 A1

**Description**

The invention relates to an optical system, more particularly to an optical system for a light emitting apparatus useful for a projector or a display.

Conventional projecting devices include a light source and an optical lens set for focusing a light beam on an object. When the light source employed in the conventional projecting device is a metal halide lamp or a high pressure mercury lamp, the service life decreases with an increase in the power; whereas when LEDs, which have a longer service life than those of the aforesaid lamps, are used as the light source, spatial uniformity of the resultant light beam projected on the object is poor due to differences in optical properties, such as luminance and color, and location relative to the lens set, of the LEDs.

U.S. Patent No. 6,318,863 discloses an illumination device for an image projection apparatus. The illumination device includes a light source for generating light beam(s), an array of first tapered light pipes for receiving the light beam(s) from the light source, a second tapered light pipe for receiving uniform light beam(s) from the first tapered light pipes, and a light valve. The second tapered light pipe has a light-exit end with a cross-section corresponding to the surface area of the light valve. As such, the light-exit end of the second tapered light pipe is too large to produce a light spot upon receiving the light beam(s) from the light source. Hence, improvement in forming a uniform light beam through the illumination device is limited.

U.S. Patent No. 6,396,647 discloses an optical system for generating a boresight light beam. The optical system includes a boresight light source for generating a light beam, a condenser lens for receiving the light beam, a spatial light integrator for receiving the light beam from the condenser lens, a constriction through which the light beam from the spatial light integrator is directed, and a collimator that receives the light beam passing through the constriction and that outputs the boresight light beam. Since the goal of the optical system is to produce a boresight light beam, the light integrator employed in the optical system is required to be in the form of a reflective rectangular light pipe or a hollow reflective rectangular light pipe having a straight narrow light passage. The constriction employed in the optical system is required to be in the form of a pinhole or a field stop. As such, although the light beam can be focused to a light spot by the constriction, a significant portion of the light beam is blocked by the constriction and cannot pass through the constriction, thereby resulting in a decrease in the luminance of the light beam directed toward an object.

Therefore, the main object of the present invention is to provide an optical system for a light emitting apparatus that can overcome the aforesaid drawbacks of the prior art and that can improve spatial uniformity of luminance and color (chrominace) of the light beam directed toward an object.

Accordingly, there is provided an optical system for generating a spatially uniform light beam upon receiving incoming light from a light source. The optical system defines an optical path and comprises: a first light integrator for passage of the incoming light therethrough, the first light integrator including an optical body that has opposite first and second ends, the second end being reduced in cross-section with respect to the first end to an extent so as to form a light spot at the second end when the optical body receives the incoming light that is incident on the first end; and a first collimator disposed adjacent to the second end of the optical body such that the distance from the light spot to the first collimator along the optical path is substantially equal to the focal length of the first collimator. The first collimator enables output of parallel rays of a light beam coming from the light spot at the second end of the optical body.

Other features and advantages of the present invention will become apparent in the following detailed description of the preferred embodiments with reference to the accompanying drawings, of which:

Fig. 1 is a schematic view of the first preferred embodiment of a light emitting apparatus according to this invention;

Fig. 2 is a schematic sectional view to illustrate a light integrator of the light emitting apparatus of the second preferred embodiment according to this invention;

Fig. 3 is a schematic view to illustrate arrangement of an optical system and a light source of the light emitting apparatus of the third preferred embodiment according to this invention;

Fig. 4 is a schematic view to illustrate arrangement of an optical system and a light source of the light emitting apparatus of the fourth preferred embodiment according to this invention;

Fig. 5 is a schematic view to illustrate a light integrator of the light emitting apparatus of the fifth preferred embodiment according to this invention;

Fig. 6 is a schematic view to illustrate a light integrator of the light emitting apparatus of the sixth preferred embodiment according to this invention;

Fig. 7 is a schematic view to illustrate arrangement of an optical system and a light source of the light emitting apparatus of the seventh preferred embodiment according to this invention;

Fig. 8 is a schematic view to illustrate arrangement of an optical system and a light source of the light emitting apparatus of the eighth preferred embodiment according to this invention; and

Fig. 9 is a schematic view to illustrate arrangement of an optical system and a light source of the light emitting apparatus of the ninth preferred embodiment according to this invention.

Before the present invention is described in greater detail with reference to the accompanying preferred embodiments, it should be noted herein that like elements are denoted by the same reference numerals throughout the disclosure.

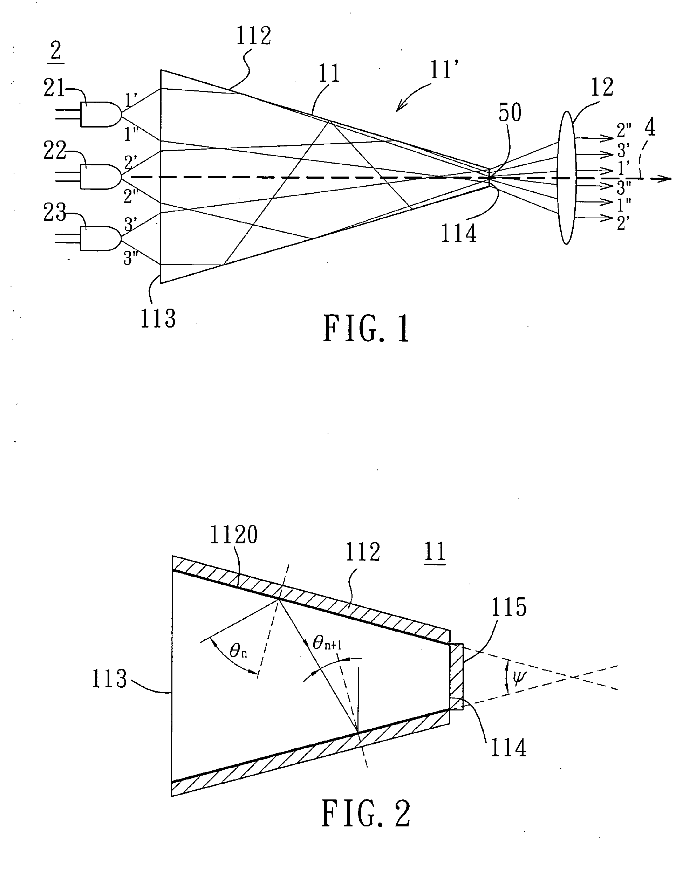

Fig. 1 illustrates the first preferred embodiment of a light emitting apparatus according to this invention. The light emitting apparatus includes a light source 2 constituted by a plurality of light emitting diodes (LEDs) 21, 22, 23, and an optical system aligned with the light source 2 along an optical path 4 for generating a spatially uniform light beam upon receiving incoming light, i.e., source light beams, from the LEDs 21, 22, 23 of the light source 2.

The optical system includes: a first light integrator 11' for passage of the incoming light therethrough, the first light integrator 11' including an optical body 11 that has opposite first and second ends 113, 114, the second end 114 being reduced in cross-section with respect to the first end 113 to an extent so as to form a light spot 50 at the second end 114 when the optical body 11 receives the incoming light that is incident on the first end 113; and a first collimator 12 disposed adjacent to the second end 114 of the optical body 11 such that the distance from the light spot 50 to the first collimator 12 along the optical path 4 is substantially equal to the focal length (f) of the first collimator 12 so as to enable the first collimator 12 to output parallel rays of a light beam coming from the light spot 50 of the optical body 11.

In this embodiment, the diameter of the cross-section (which is circular in shape) of the second end 114 of the optical body 11 preferably ranges from 0.1mm to 10mm so as to achieve the smallest possible light spot 50, thereby enhancing spatial uniformity of the light beam output from the optical body 11. Alternatively, the cross-section of the second end 114 of the optical body 11 can be triangular, square, rectangular, and polygonal in shape.

Preferably, the optical body 11 is tapered gradually from the first end 113 to the second end 114, and is frusto-conical in shape so as to permit thorough mixing of light propagating in the optical body 11 along the optical path 4. The mixing of the light after passing through the optical body 11 can be seen from the changes in positions of rays 1', 1" (2', 2", 3', 3") of the source light beam from each of the LEDs 21 (22, 23) with respect to the optical path 4 at the first and second ends 113, 114 of the optical body 11.

The optical body 11 has a surrounding surface 112 that converges from the first end 113 to the second end 114 of the optical body 11 in such a manner to permit total internal reflection in the optical body 11 during light beam propagation in a direction from the first end 113 toward the second end 114 of the optical body 11.

The optical body 11 can be a solid body or a hollow body. When the optical body 11 is a hollow body, the surrounding surface 112 of the optical body 11 is preferably formed with a reflective metal layer (1120) or a reflective film, such as an optical reflective multi-layered film, so as to permit total internal reflection in the optical body 11 for any incident angles of the light beam incident on the optical body 11. When the optical body 11 is made from a solid body, the same is preferably made from a high refractive index material, such as polycarbonate or an acrylic material.

In addition, the maximum number of total internal reflection in the optical body 11 can be obtained by satisfying the following equation:

$$n_{max} = (\theta_o - \sin^{-1}(\frac{n_2}{n_1})) / \phi \quad \ldots (A\text{-}1)$$

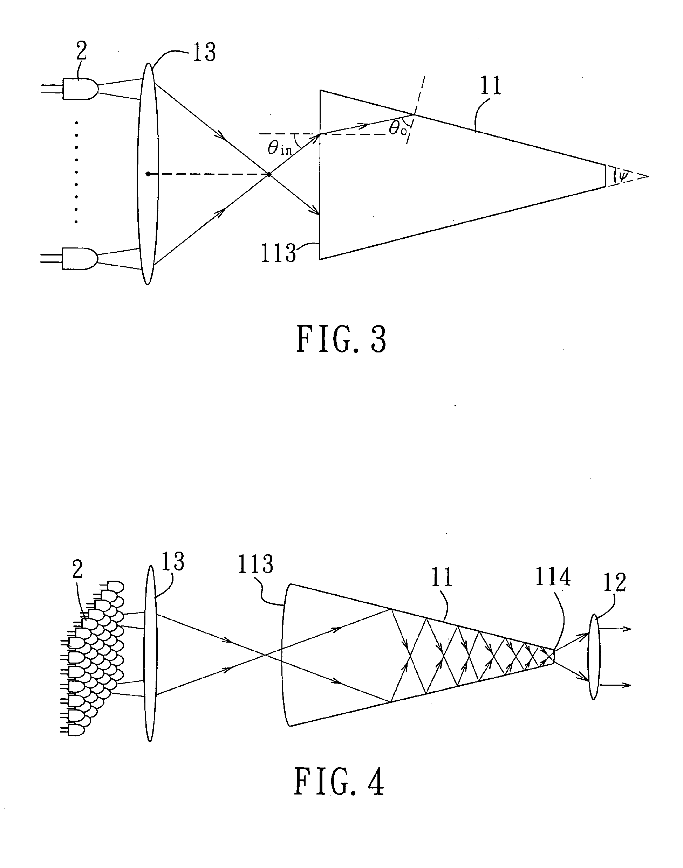

where $\theta_o$ (see Fig. 3) is the initial incident angle of the light beam initially incident on the optical body 11; $\phi$ is the vertex angle defined by the optical body 11; $n_1$ is the refractive index of the optical body 11, such as a solid polycarbonate; $n_2$ is the refractive index of the surrounding of the optical body 11, such as air; and $n_{max}$ is the maximum number of total internal reflection. It is noted that for a hollow body, the maximum number $n_{max}$ of total internal reflection in the optical body 11 can be represented by the following equation:

$$n_{max} = \theta_o / \phi$$

Equation (A-1) is derived by the following equations.

Referring to Fig. 2, $\theta_n$ represents the incident angle of the light beam after n times of reflection in the optical body 11, and $\theta_{n+1}$ represents the next incident angle after $\theta$n. Relation between $\theta_n$ and $\theta_{n+1}$ is represented:

$$\theta_{n+1} = \theta_n - \phi \quad \ldots (A\text{-}2)$$

Hence, the incident angle $\theta_n$ after n times of total internal reflection in the optical body 11 can be derived From Equation (A-2) and represented by:

$$\theta_n = \theta_o - n\phi \quad \ldots (A-3)$$

Since total internal reflection requires the incident angle $\theta_n$ greater than a critical angle $\theta_c$ that is defined as follows:

$$\theta_c = \sin^{-1}\left(\frac{n_2}{n_1}\right) \quad \ldots \quad (A-4)$$

the relation between $\theta_n$ and $\theta_c$ can be represented by the following equation:

$$\theta_o - n\phi \geqq \sin^{-1}\left(\frac{n_2}{n_1}\right) \quad \ldots (A-5)$$

Hence, a maximum number of total internal reflection, i.e., Equation (A-1), can be derived from Equation (A-5) . It is noted that by satisfying Equation (A-1), backward reflection of the light beam in the optical body 11 can be minimized.

In view of Equation (A-1), the number of total internal reflection can be increased by increasing the initial incident angle $\theta_o$, which can be achieved by decreasing an input angle $\theta_{in}$ (see Fig. 3) by using a condenser lens 13. The relation between $\theta_o$ and $\theta_{in}$ can be represented by:

$$\theta_o = 90° - \phi/2 - \sin^{-1}\left(\frac{\sin^{-1}\theta_{in}}{n_1}\right) \quad \ldots (A-6)$$

Hence, by using the condenser lens 13, the number of total internal reflection can be increased.

Fig. 2 illustrates a light integrator of the second preferred embodiment of the light emitting apparatus according to this invention. The light integrator of this embodiment differs from that of the previous embodiment in the inclusion of a known optical multi-layered film 115 that is coated on the second end 114 of the optical body 11 for increasing output efficiency of the uniform light beam from the second end 114 of the optical body 11.

Fig. 3 illustrates the third preferred embodiment of the light emitting apparatus according to this invention. The light emitting apparatus of this embodiment differs from the first preferred embodiment in that there is the first condenser lens 13 disposed adjacent to the first end 113 of the optical body 11 so as to focus the incoming light on the first end 113 of the optical body 11 upon receiving the incoming light from the light source 2.

Fig. 4 illustrates the fourth preferred embodiment of the light emitting apparatus according to this invention. The light emitting apparatus of this embodiment differs from the third preferred embodiment in that the light source 2 includes an array of LEDs and that the first and second ends 113, 114 of the optical body 11 respectively have curved end faces.

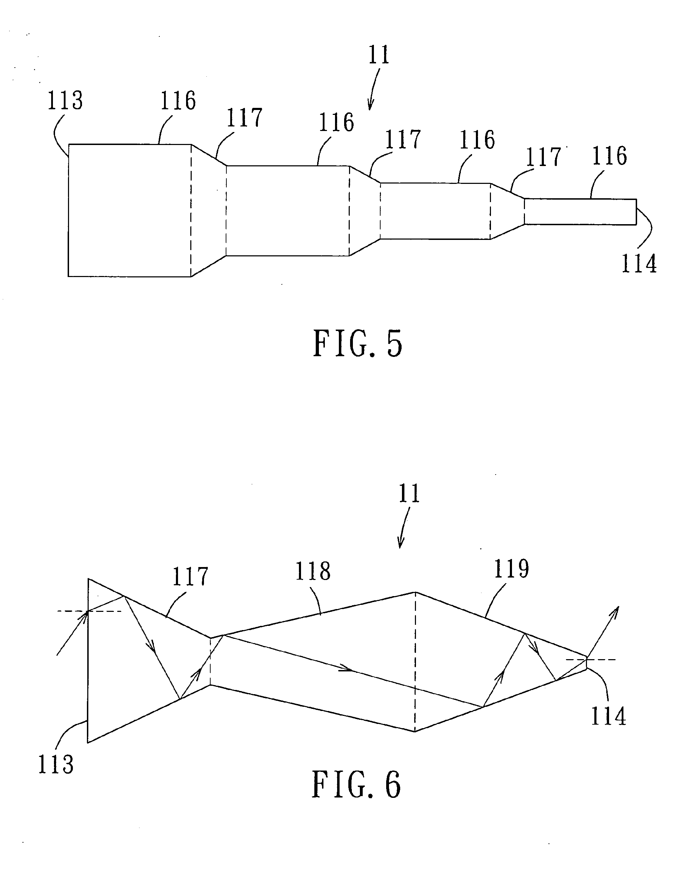

Fig. 5 illustrates a light integrator of the fifth preferred embodiment of the light emitting apparatus according to this invention. The light integrator of this embodiment is different from that of the first preferred embodiment in view of the optical body 11 that includes straight segments 116 and tapered segments 117 which are alternately disposed with the straight segments 116 and which are tapered in a direction from the first end 113 toward the second end 114 of the optical body 11.

Fig. 6 illustrates a light integrator of the sixth preferred embodiment of the light emitting apparatus according to this invention. The light integrator of this embodiment is different from that of the first preferred embodiment in view of the optical body 11 that includes first and second tapered segments 117, 119 and a middle tapered segment 118 connected to and disposed between the first and second tapered segments 117, 119. The first tapered segment 117 has an end that defines the first end 113 of the optical body 11. The second tapered segment 119 has an end that defines the second end 114 of the optical body 11. The first and second tapered segments 117, 119 are tapered in a direction from the first end 113 of the optical body 11 toward the second end 114 of the optical body 11. The middle tapered segment 118 is tapered in an opposite direction opposite to the direction from the first end 113 toward the second end 114 of the optical body 11.

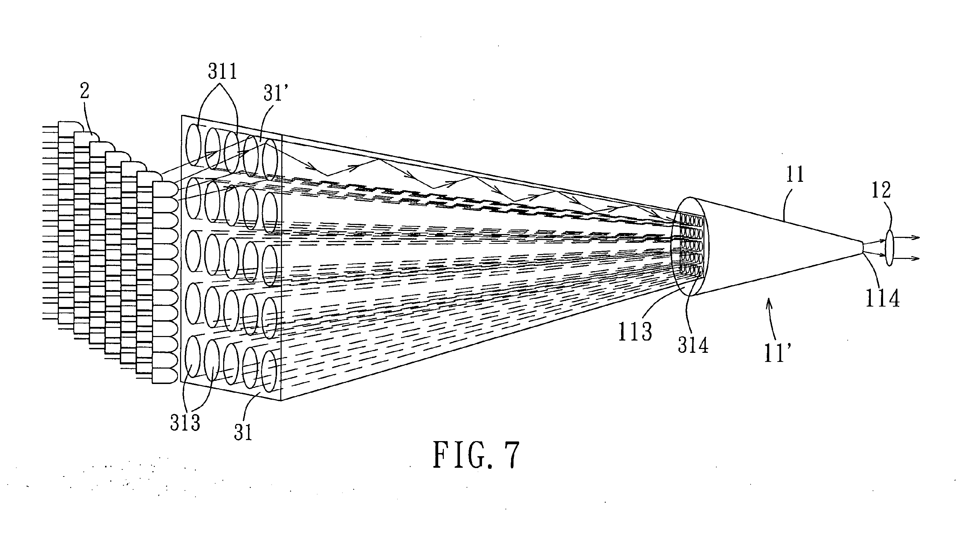

Fig. 7 illustrates the seventh preferred embodiment of the light emitting apparatus according to this invention. The light emitting apparatus of this embodiment differs from the first preferred embodiment in that there is an array of second light integrators 31', each of which includes a tapered optical body 31 and each of which is disposed adj acent to the first end 113 of the optical body 11 of the first light integrator 11' for receiving the incoming light from the light source 2 and for outputing a processed light beam corresponding to the incoming light to the first end 113 of the optical body 11 of the first light integrator 11'. In this embodiment, the light source 2 includes an array of LEDs. The second light integrators 31' are integrally formed in a single piece. The tapered optical body 31 of each of the second light integrators 31' has a structure similar to that of the optical body 11 of the first light integrator 11'.

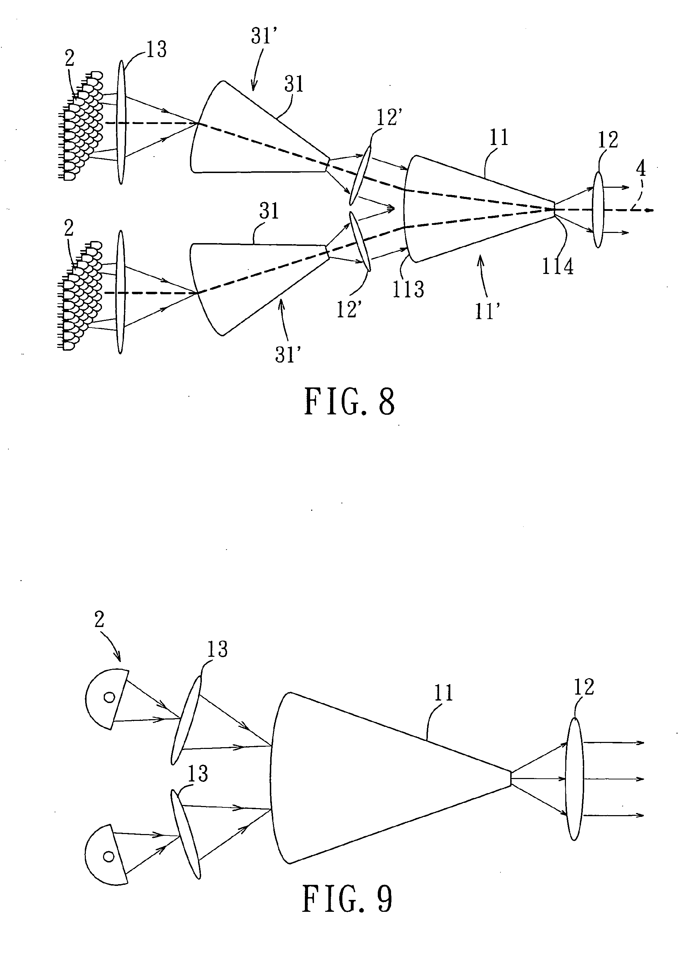

Fig. 8 illustrates the eighth preferred embodiment of the light emitting apparatus according to this invention. The light emitting apparatus of this embodiment differs from the first preferred embodiment in that there is a plurality of second light integrators 31' and a plurality of second collimators 12'. In addition, the light emitting apparatus of this embodiment includes a plurality of the condenser lenses 13 and a plurality of the light sources 2. Each of the second light integrators 31' includes a tapered optical body 31 that has a structure similar to that of the optical body 11 of the first light integrator 11'. Each of the second collimators 12' is disposed between the first end 113 of the optical body 11 of the first light integrator 11' and the tapered optical body 31 of a respective one of the second light integrators 31'. Each of the condenser lenses 13 is disposed between the tapered optical body 31 of a respective one of the second light integrators 31' and a respective one of the light sources 2.

Fig. 9 illustrates the ninth preferred embodiment of the light emitting apparatus according to this invention. The light emitting apparatus of this embodiment differs from the third preferred embodiment in that there is a plurality of condenser lenses 13. The light source 2 includes a plurality of high pressure mercury lamps. Each of the condenser lenses 13 receives the light beam generated by a respective one of the high pressure mercury lamps.

Byvirtue of the optical body 11 of the first light integrator 11' of the optical system of the preferred embodiments of this invention, the aforesaid drawbacks associated with the prior art can be eliminated.

**Claims**

1. An optical system for generating a spatially uniform light beam upon receiving incoming light from a light source (2), said optical system defining an optical path (4) and comprising:

   a first light integrator (11') for passage of the incoming light therethrough, said first light integrator (11') including an optical body (11) that has opposite first and second ends (113, 114), said second end (114) being reduced in cross-section with respect to said first end (113) to an extent so as to form a light spot (50) at said second end (114) when said optical body (11) receives the incoming light that is incident on said first end (113); and a first collimator (12) disposed adjacent to said second end (114) of said optical body (11) such that the distance from said light spot (50) to said first collimator (12) along the optical path (4) is substantially equal to the focal length (f) of said first collimator (12);

   wherein said first collimator (12) enables output of parallel rays of a light beam coming from said light spot (50) at said second end (114) of said optical body (11).

2. The optical system as claimed in Claim 1, wherein said optical body (11) is hollow.

3. The optical system as claimed in Claim 1, wherein the diameter of the cross-section of said second end (114) of said optical body (11) ranges from 0.1mm to 10mm.

4. The optical system as claimed in Claim 1, further comprising an optical multi-layered film (115) coated on said second end (114) of said optical body (11) for increasing output efficiency of the uniform light beam from said second end (114) of said optical body (11).

5. The optical system as claimed in Claim 1, wherein said optical body (11) is tapered gradually from said first end (113) to said second end (114).

6. The optical system as claimed in Claim 5, wherein said optical body (11) is frusto-conical in shape.

7. The optical system as claimed in Claim 6, wherein said optical body (11) has a surrounding surface (112) that is formed with an optical reflective film (1120).

8. The optical system as claimed in Claim 6, wherein said optical body (11) has a surrounding surface (112) that is formed with a reflective metal layer (1120).

9. The optical system as claimed in Claim 1, further comprising a first condenser lens (13) disposed adjacent to said first end (113) of said optical body (11) so as to focus the incoming light on said first end (113) of said optical body (11) upon receiving the incoming light from the light source (2).

10. The optical system as claimed in Claim 1, further comprising an array of second light integrators (31'), each of which includes a tapered optical body (31) and each of which is disposed adjacent to said first end (113) of said optical body (11) of said first light integrator (11') for receiving the incoming light from the light source (2) and for outputing a processed light beam corresponding to the incoming light to said first end (113) of said optical body (11) of said first light integrator (11').

11. The optical system as claimed in Claim 10, further comprising a plurality of second collimators (12'), each of which is disposed between said first end (113) of said optical body (11) of said first light integrator (11') and a respective one of said second light integrators (31').

12. The optical system as claimed in Claim 1, wherein said optical body (11) includes straight segments (116) and tapered segments (117) that are alternately disposed with said straight segments (116) and that are tapered in a direction from said first end (113) toward said second end (114) of said optical body (11).

13. The optical system as claimed in Claim 1, wherein said optical body (11) includes first and second tapered segments (117, 119) and a middle tapered segment (118) connected to and disposed between said first and second tapered segments (117, 119), said first tapered segment (117) having an end that defines said first end (113) of said optical body (11), said second tapered segment (119) having an end that defines said second end (114) of said optical body (11), said first and second tapered segments (117, 119) being tapered in a direction from said first end (113) toward said second end (114) of said optical body (11), said middle tapered segment (118) being tapered in an opposite direction opposite to the direction from said first end (113) toward said second end (114) of said optical body (11).

14. The optical system as claimed in Claim 1, wherein each of said first and second ends (113, 114) of said optical body (11) has a curved end face.

15. A light emitting apparatus comprising:

a light source (2) for generating a source light beam; and
an optical system defining an optical path (4) and including
a light integrator (11') for passage of the source light beam therethrough, said light integrator (11') including an optical body (11) that has opposite first and second ends (113, 114), said second end (114) being reduced in cross-section with respect to said first end (113) to an extent so as to form a light spot (50) at said second end (114) when said optical body (11) receives the source light beam that is incident on said first end (113), and
a collimator (12) disposed adjacent to said second end (114) of said optical body (11) such that the distance from said light spot (50) to said collimator (12) along the optical path (4) is substantially equal to the focal length (f) of said collimator (12);

wherein said collimator (12) enables output of parallel rays of a light beam coming from said light spot (50) at said second end (114) of said optical body (11).

16. The light emitting apparatus as claimed in Claim 15, wherein said optical body (11) is hollow.

17. The light emitting apparatus as claimed in Claim 15, wherein the diameter of the cross-section of said second end (114) of said optical body (11) ranges from 0.1mm to 10mm.

18. The light emitting apparatus as claimed in Claim 15, wherein said optical body (11) is tapered gradually from said first end (113) to said second end (114).

**19.** The light emitting apparatus as claimed in Claim 18, wherein said optical body (114) is frusto-conical in shape.

**20.** The light emitting apparatus as claimed in Claim 19, wherein said optical body (11) has a surrounding surface (112) that is formed with an optical reflective film (1120).

**21.** The light emitting apparatus as claimed in Claim 19, wherein said optical body (11) has a surrounding surface (112) that is formed with a reflective metal layer (1120).

**22.** The light emitting apparatus as claimed in Claim 15, comprising an array of said light sources (2).

**FIG. 1**

**FIG. 2**

FIG. 3

FIG. 4

FIG. 5

FIG. 6

FIG. 7

EP 1 731 956 A1

FIG. 8

FIG. 9

**European Patent Office**

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/207816 A1 (OMODA MANABU ET AL) 21 October 2004 (2004-10-21) * figure 10 * * figure 11 * | 1-3,6-22 | G03B21/14 |
| E | FR 2 868 505 A (DEGRE K SOCIETE ANONYME) 7 October 2005 (2005-10-07) * the whole document * | 1-3,6-9, 12,14-22 | |
| X | EP 0 775 927 A (TEXAS INSTRUMENTS INCORPORATED) 28 May 1997 (1997-05-28) * figure 5 * | 1-3,6-9, 12,14-22 | |
| A | US 6 191 872 B1 (DECARO JOEL D ET AL) 20 February 2001 (2001-02-20) * abstract * | 2,16 | |
| X | US 6 676 279 B1 (HUBBELL DAVID A ET AL) 13 January 2004 (2004-01-13) * figure 4 * | 13 | |
| A | DE 100 00 992 A1 (HELLA KG HUECK & CO) 19 July 2001 (2001-07-19) * the whole document * | 10 | **TECHNICAL FIELDS SEARCHED (IPC)** G03B H04N |

The present search report has been drawn up for all claims

| Place of search | Date of completion of the search | Examiner |
|---|---|---|
| Munich | 27 January 2006 | PAVON |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 01 2485

This annex lists the patent family members relating to the patent documents cited in  the above-mentioned European search report.
The members are as contained in the European Patent Office EDP file on
The European Patent Office is in no way liable for these particulars which are merely  given for the purpose of information.

27-01-2006

| Patent document cited in search report | | Publication date | Patent family member(s) | | Publication date |
|---|---|---|---|---|---|
| US 2004207816 | A1 | 21-10-2004 | CN<br>JP | 1538235 A<br>2004335992 A | 20-10-2004<br>25-11-2004 |
| FR 2868505 | A | 07-10-2005 | NONE | | |
| EP 0775927 | A | 28-05-1997 | DE<br>DE<br>JP | 69622820 D1<br>69622820 T2<br>9251134 A | 12-09-2002<br>10-04-2003<br>22-09-1997 |
| US 6191872 | B1 | 20-02-2001 | NONE | | |
| US 6676279 | B1 | 13-01-2004 | US<br>US | 2002159274 A1<br>2002163805 A1 | 31-10-2002<br>07-11-2002 |
| DE 10000992 | A1 | 19-07-2001 | NONE | | |

EPO FORM P0459

For more details about this annex : see Official Journal of the European Patent Office, No. 12/82

**EP 1 731 956 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6318863 B
- US 6396647 B